# EUROPEAN PATENT APPLICATION

(11) **EP 1 199 693 A2**
(43) Date of publication of application: **24.04.2002**
(21) Application number: 01124576.8
(22) Date of filing: 15.10.2001
(51) Int. Cl.: G07F 19/00, G06F 17/60

(54) **Apparatus and method for electronically creating and storing an electronic post dated financial instrument**

(30) Priority: 16.10.2000 US 688661
(71) Applicant: Actrade Commerce Ltd., St. John's (AG)
(72) Inventor: Aharoni, Amos, New York, NY 11754-2509 (US)
(74) Representative: Gervasi, Gemma, Dr.

(57) **Abstract**

Apparatus and method for electronically creating and storing an electronic deferred payment obligation in an electronic post dated financial instrument. The instrument, which is an electronic record, containing data which identifies a maker, a payee, a dollar amount following the name of the payee, a due date, a bank, an address for the bank, and an electronic collection process.

## Description

### BACKGROUND OF THE INVENTION

In many commercial transactions, a buyer of goods/services would like to purchase same from a supplier but is unable or unwilling to make immediate complete payment for delivery of these goods/services. Often these parties agree to accept any one of known types of hard copy financial instruments which when issued by the buyer contains entries identifying the buyer, the payee, the purchase amount, the buyer's bank, a due date and other data and also provides for deferred payment.. This document is transferred to the supplier who may sell it to others or upon the due date collect the payment from the buyer.

The present invention is directed toward a new type of electronic document which can be electronically created and stored in a unique manner, and can be used more conveniently and efficiently in place of the known types of post dated financial instruments.

### SUMMARY OF THE INVENTION

In order to utilize this invention, a maker must have a computer electronically connected to a server under the control of a separate operator. The maker must be previously approved by the operator and must have a specific account with a specific bank from which the operator has obtained previous assurance that the maker has properly reported the relationship between the maker and the operator.

This invention is directed toward apparatus and method for creating an electronic deferred payment obligation through an electronic post dated financial instrument. The instrument, which is an electronic record, contains data which identifies a maker, a payee, a dollar amount following the name of the payee, a due date, a bank, an address for the bank, and an electronic collection method.

The bank address can be an ABA number address. The electronic collection method can be by encoding, ACH, SUIFT wire or other methods.

In use, the maker via his computer sends to the server a request for creating and storing said data and to create this record and to assign to it a unique identification number and a unique area in which the data is stored.

The server responds by storing and creating the data and creating the record, and assigns the said number and said area. The server then forwards an electronic image of the record, including the assigned number and area, to the computer for displaying this image.

The maker, after reviewing and approving the image, accepts the deferred payment obligation by electronically affixing his signature thereto and then forwards this signature via the computer to the server, whereby the server adds the signature to the stored record and electronically seals it, thereby creating the desired financial instrument.

The sealed instrument cannot be changed.

Before due date, the sealed electronic instrument can be produced once as an original hard copy but in that case the electronic sealed record is destroyed.

On due date the server automatically collects the payment amount from the maker bank account using the agreed collection method.

### BRIEF DESCRIPTION OF THE DRAWINGS

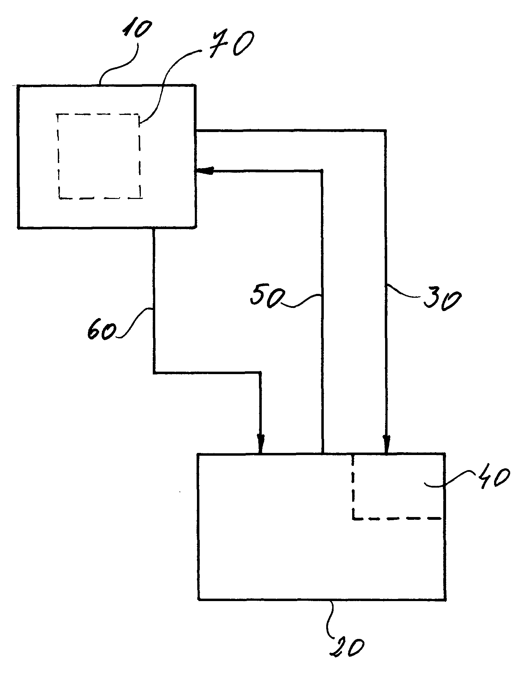

The accompanying figure illustrates the apparatus and method utilized in a preferred form of this invention.

### DETAILED DESCRIPTION OF PREFERRED EMBODIMENT

Referring now to the figure, a maker has a computer 10 which is electronically connected to a server 20. The maker, using the computer, sends the data identified previously via transmission 30 to the server and requests the server to create and store the data, creating the record by assigning to it the unique number and unique storage area.

The server stores the data together with the unique number and storage area in storage area 40. The server then transmits via transmission 50 an electronic image 70 of this record to the computer 10 for viewing by the maker.

If the maker approves, he electronically signs the image and sends his signature (the server operator has means for identifying the signature) via transmission 60 to the server whereby the server adds this signature to the previously stored data, and electronically seals it, thus creating the financial instrument. in area 40.

While the invention has been described with particular reference to the detailed description and the figure, the protection solicited should be limited only the terms of the claims which follow.

## Claims

1. Apparatus for electronically creating and storing an electronic deferred payment obligation in an electronic post dated financial instrument., said instrument, which is an electronic record, containing data which identifies a maker, a payee, a dollar amount following the name of the payee, a due date, a bank, an address for the bank, and an electronic collection method, said apparatus comprising:
first means including a server for receiving a request for creating and storing said data and responding to said request by creating said record and assigning to it a unique identification number and a unique storage area in which said data is stored;
second means including a computer operated by the maker and electronically connected to said first means for said maker to initiate said request and forward it to said first means;
said server after creating and storing said data and assigning said number and area forwarding an electronic image of said record to said computer for viewing by said maker;
said maker after viewing and approving said image accepts the deferred payment obligation by electronically signing said image with his signature and forwards this signature via said computer to said server, whereby the server adds the signature to the previously stored record, thus creating and sealing said instrument which cannot then be changed..

2. The apparatus of claim 1 wherein the instrument being accessible only when used to produce an original hard copy and being destroyed when said hard copy is produced.

3. The apparatus of claim 2 wherein the bank address is an ABA number address.

4. The Apparatus of claim 3 wherein the collection method includes encoding, ACH, and SUIFT wire.

5. A method for electronically creating and storing an electronic deferred payment obligation in an electronic post dated financial instrument., said instrument, which is an electronic record, containing data which identifies a maker, a payee, a dollar amount following the name of the payee, a due date, a bank, an address for the bank, and an electronic collection process, said method comprising
providing a server for receiving a request for creating and storing said data and responding to said request by creating said record and assigning to it a unique identification number and a unique storage area in which said data is stored;
providing a computer operated by the maker and electronically connected to said server for said maker to initiate said request and forward it to said server:
said server, after creating storing said data in the server and assigning said number and area thereto forwarding an electronic image of said record to said computer for viewing by said maker;
said maker, after viewing and approving said image electronically, signs said image with his signature and forwards this signature via said computer to said server, whereby the server adds the signature to the previously stored record, thus creating said instrument, the instrument being accessible only when used to produce an original hard copy and being destroyed when said hard copy is produced.
